# EUROPEAN PATENT APPLICATION

(11) **EP 3 261 350 A1**
(43) Date of publication of application: **27.12.2017**
(21) Application number: 16176184.6
(22) Date of filing: 24.06.2016
(51) Int. Cl.: H04N 21/214, H04N 7/18, H04N 21/2187, H04N 21/414, H04N 21/422, H04N 21/432, H04N 21/433, H04N 21/4363, H04N 21/4367, H04N 21/439, H04N 21/472, H04N 21/485, H04N 21/81

(54) **PASSENGER ANNOUNCEMENTS HISTORY REPLAY**

(71) Applicant: Airbus Operations GmbH, 21129 Hamburg (DE)
(72) Inventor: Berkhahn, Dr. Sven-Olaf, 21129 Hamburg (DE); Lüdtke, Michael, 21129 Hamburg (DE)
(74) Representative: Frenkel, Matthias Alexander

(57) **Abstract**

The present disclosure generally relates to the field of providing audio signals on board an aircraft. More particularly, the present invention relates to a method of providing audio signals that are related to announcements to passengers upon request, to a computer program product for carrying out such a method, an apparatus for providing audio signals related to passenger announcements on board an aircraft, and to an aircraft comprising such an apparatus. A method embodiment comprises: obtaining an audio signal related to an announcement to passengers of an aircraft; forwarding the audio signal to a storage unit; and providing the audio signal to one or more of the passengers on board the aircraft upon request.

## Description

The present disclosure generally relates to the field of providing an audio signal on board an aircraft. More particularly, the present invention relates to a method of providing an audio signal that is related to an announcement to passengers upon request, to a computer program product for carrying out such a method, an apparatus for providing audio signals related to passenger announcements on board an aircraft, and to an aircraft comprising such an apparatus.

Several announcements are usually made on board an aircraft by aircraft personnel like flight attendants and pilots. For example, such announcements are made before or after take-off and landing, but also during flights when special situations like e.g. turbulent flows arise. In general, two different types of announcements exists on board an aircraft, the first being pre-recorded announcements and the second being live announcements. Pre-recorded announcements are sometimes called Pre-Recorded Announcements and Music (PRAM) and live announcements are often called Passenger Address (PA) announcements. The announcements may contain, among other things, information on a current flight schedule, current flight height, current weather reports and weather forecasts at the destination airport, information on connecting flights and safety instructions for the passengers.

However, sometimes these announcements, especially live announcements suffer from bad voice quality and can therefore be difficult to be followed by the passengers, especially for hearing-impaired people. Further, the announcements are often made in a language some of the passengers are not able to understand properly or they do not even speak the languages announcements are made in at all. During long term flights, it is also possible that several announcements are missed by some passengers, because they may be asleep during an announcement is made or may be simply distracted.

If plenty of information is given during a single announcement, or if a passenger misses an announcement or some parts of it due to one of the reasons stated above, passengers may have the wish to re-listen to one or more of such announcements at a later point in time.

Accordingly, there is a need for a technique to make it individually possible to passengers on board an aircraft to replay announcements like PRAM and PA announcements upon request, i.e. when a passenger demands so.

According to a first aspect, a method of providing an audio signal on board an aircraft is provided. The method comprises obtaining an audio signal related to an announcement to passengers of an aircraft and forwarding the audio signal to a storage unit. The method further comprises providing the audio signal to one or more of the passengers on board the aircraft upon request.

The announcement may relate to a live announcement on board the aircraft such as a PA announcement or to a pre-recorded announcement such as a PRAM. A microphone may be utilized for obtaining the announcement as an audio signal. The forwarding of the audio signal to the storage unit may be conducted via cable connection or in a wireless manner.

The step of providing the audio signal may comprise retrieving the audio signal from the storage unit in response to a request from one or more of the passengers via an interface of a terminal on board the aircraft. The step of providing the audio signal may further comprise replaying the audio signal utilizing an audio output unit of the terminal.

Similarly to the forwarding of the audio signal set forth above, the retrieving of the audio signal may be conducted via cable connection or in a wireless manner. The request for retrieving the audio signal may be sent from a single passenger of the aircraft or all passengers of the aircraft or any number of passengers of the aircraft in between. The request by the passenger via the interface of the terminal may be initiated by pressing a button on a remote control of the terminal. Alternatively, the request may be initiated by touching an icon or a button of a touch sensitive display of the terminal.

The replaying of the audio signal may be conducted once upon request. Alternatively, the replaying of the audio signal may be conducted more than once, e.g. two or three times upon request. The number of requests is not limited. Therefore, a certain announcement may be replayed as many times as desired (requested) by the passenger. The replaying may be carried out utilizing an audio output unit of the terminal, such as a headphone and/or a loud speaker of the terminal.

The terminal itself may be a terminal of an in-flight entertainment (IFE) system. Alternatively, the terminal may be a mobile terminal such as a mobile phone, a smartphone, a laptop, a personal digital assistant or any other suited mobile terminal. The mobile terminal may be in permanent possession of one of the passengers and may be brought on board by the passenger itself. Alternatively, the terminal of the IFE-system may be a terminal that is permanently mounted to the back of a seat or to any other suited location within the aircraft.

The step of obtaining the audio signal may further comprise recording the announcement to the passengers by a cabin management system of the aircraft and/or by the terminal on board the aircraft. The recording is not limited to a single announcement. Rather, recording all announcements or a random number of announcements during a flight may be recorded and subsequently forwarded to the storage unit. As such, it may later be possible for the passengers to select between all announcements recorded until a certain point in time for being replayed upon request.

The storage unit may be a storage unit permanently arranged on board the aircraft. For example, the storage unit may be a server device installed on board the aircraft such as a Cabin Intercommunication Data System (CIDS), a Flight Attendant Panel (FAP) or a Head-End Server Unit (HESU). Alternatively, the storage unit may be a storage unit of the mobile terminal. The storage unit of the mobile terminal may be fixedly arranged therein or may be a memory card detachably connected to the mobile terminal.

The step of providing the audio signal may further comprise filtering of the audio signal according to a filter characteristic. The filter characteristic may be a predetermined filter characteristic to compensate for aircraft-related noise. The filter characteristic may be adapted to remove or at least suppress certain noise such as vibrations of the aircraft cabin, engine noise and/or certain background noise such as conversations between passengers.

Alternatively or additionally, the filter characteristic may be individually adjusted by one or more of the passengers by adjusting an equalizer functionality. As such, it may be possible for the passengers to change the filter characteristics according to their personal hearing needs by adjusting tone colour, bass and/or treble.

The step of forwarding the audio signal to the storage unit may comprise forwarding the audio signal via a secure interface. The audio signal may be encrypted before forwarding it to the storage unit via the secure interface.

According to a second aspect, a computer program product is provided. The computer program product comprises program code portions for performing one or more of the steps of any of the method aspects described herein, when the computer program product is run or executed on a computer system or on one or more computing devices. The computer program product may be stored on a computer readable recording medium, such as a permanent or rewriteable memory, or may be downloadable as a signal.

According to a third aspect, an apparatus for providing an audio signal on board an aircraft is provided. The apparatus comprises an obtaining unit, a forwarding unit and a providing unit. The obtaining unit is configured to obtain an audio signal related to an announcement to passengers of an aircraft. The forwarding unit is configured to forward the audio signal to a storage unit. The providing unit is configured to provide the audio signal to one or more of the passengers on board the aircraft upon request.

According to a fourth aspect, an aircraft is provided. The aircraft comprises the apparatus as described herein.

All of the aspects described herein may be implemented by hardware circuitry and/or by software. Even if some of the aspects are described herein with respect to the apparatus, these aspects may also be implemented as a method or as a computer program for performing or executing the method. Likewise, aspects described as or with reference to a method may be realised by suitable components in the apparatus, or by means of the computer program.

In the following, the present disclosure will further be described with reference to exemplary embodiments illustrated in the figures, in which:
- Figure 1: schematically illustrates an apparatus embodiment on board an aircraft; and
- Figure 2: schematically illustrates a flow chart of a method embodiment which may be performed by the apparatus of Figure 1.

In the following description, for purposes of explanation and not limitation, specific details are set forth in order to provide a further understanding of the present disclosure. It will be apparent to one skilled in the art at the present disclosure may be practiced in other implementations that depart from the specific details described herein. For example, the specific types of announcements on board the aircraft mentioned below are just of exemplary in nature and other announcement types may be used in a similar manner. Further, whenever it is referred to a passenger or a terminal in singular, it is conceivable that the pertaining part of the disclosure similarly embraces a plurality of passengers and/or terminals, and vice versa.

Those skilled in the art will further appreciate that functions explained herein below may be implemented using individual hardware circuitry, using software functioning in conjunction with a programmed microprocessor or a general purpose computer, using an application specific integrated circuit (ASIC) and/or using one or more digital signal processors (DSPs). It will also be appreciated that when the present disclosure is described as a method, it may also be embodied in the device, a computer processor and a memory coupled to a processor, wherein the memory is encoded with one or more programs that perform the methods disclosed herein when executed by the processor.

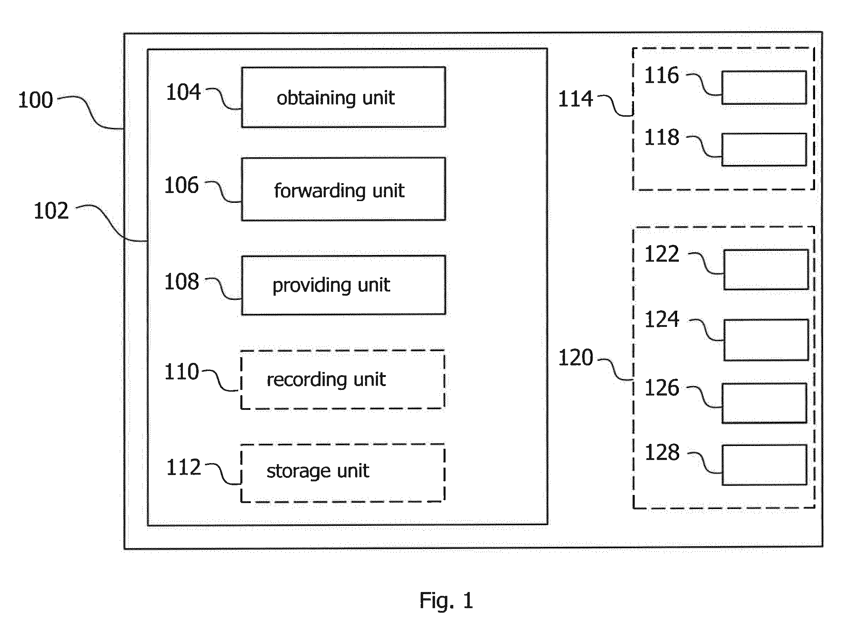

Figure 1 schematically illustrates an exemplary embodiment of an apparatus 102 for providing an audio signal that is related to an announcement to passengers on board an aircraft 100. The apparatus 102 comprises an obtaining unit 104, a forwarding unit 106 and a providing unit 108. Further, the apparatus 102 may comprise one or more of a recording unit 110 and a storage unit 112. Although the recording unit 110 and the storage unit 112 are shown in Figure 1 as being part of the apparatus 102, they may equally be arranged outside the apparatus 102. In this case, the apparatus 102 may store and retrieve data from the storage unit 112 arranged outside the apparatus 102.

Similarly, the apparatus 102 may obtain an audio signal from the recording unit 110 such as e.g. a microphone located outside the apparatus 102. The obtaining unit 104 is configured to obtain an audio signal related to an announcement to passengers of the aircraft 100. Said audio signal may be an audio signal recorded preliminary to the obtaining by the recording unit 110 or by any other suited recording unit. The forwarding unit 106 is configured to forward the audio signal to a storage unit. The storage unit may for example be the storage unit 112 arranged inside or outside the apparatus 102. The providing unit 108 is configured to provide the audio signal to one or more of the passengers on board the aircraft 100 upon request.

On board the aircraft 100, there may reside one or more mobile terminals 120. The mobile terminals 120 may be the property of one or more of the passengers of the aircraft and may be brought on board to the aircraft during boarding time. The aircraft 100 may further comprise an IFE-system having one or more terminals 114 that are fixedly arranged inside the aircraft, e.g. at the rear of passenger seats and/or in the hallway of the aircraft 100.

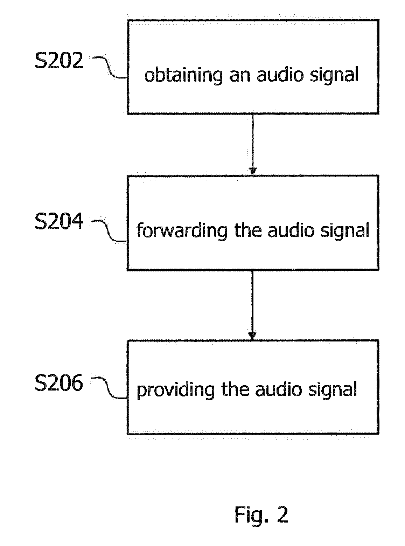

Figure 2 schematically illustrates a flow chart of a method which may be performed by the apparatus 102, optionally in combination with one or more of the mobile terminals 120 and/or with one or more of the terminals 114 of the IFE-system. Thus, further details regarding the operation of the apparatus 102 will be described in the following with reference to both Figures 1 and 2.

In step S202, an audio signal related to an announcement to passengers of an aircraft is obtained by the obtaining unit 104. In step S204, the audio signal is forwarded to a storage unit by the forwarding unit 106. In step S206, the audio signal is provided to one or more of the passengers on board the aircraft upon request by the providing unit 108.

Further optional details regarding the apparatus 102 of Figure 1 and the method of Figure 2 are explained in the following.

The apparatus 102 may be integrated into or combined with - e.g. as a software or hardware component - one or more existing systems provided in the aircraft 100 and supplement these systems by providing the functionalities described herein that may be used to execute desired functions of these systems and/or extend the functionalities of these systems by adding additional functions. For example, the apparatus 102 may be integrated into or connected with a cabin management system of the aircraft 100 such as the CIDS. It will be understood that other implementations of the apparatus 102 are conceivable. For example, the apparatus 102 may be provided as a standalone unit that may communicate, for example via a network, with other systems or entities provided in the aircraft 100 and trigger execution of functions provided by these systems.

An announcement, e.g. a spoken text may be either provided live (e.g. through loudspeakers arranged in the aircraft 100) by the flight personnel or may be provided from tape. In case of the announcement being a live announcement, the live announcement may be recorded by the recording unit 110 of the apparatus 102. Alternatively or additionally, the live announcement may be recorded by a recording unit 122 of the mobile terminal 120. It is further conceivable that the live announcement may be recorded by a recording unit (not shown in Fig. 1) of the terminal 114 of the IFE-system.

If the announcement is a pre-recorded announcement which is replayed from tape via loudspeakers to the passengers of the aircraft 100, the pre-recorded announcement may similarly either be recorded by the recording unit 110 and/or by the recording unit 122 and/or by the recording unit of the terminal 114 of the IFE-system. Alternatively, the pre-recorded announcement may be directly forwarded by the forwarding unit 106 to a suited storage.

The storage unit the audio signal is forwarded to may either be the storage unit 112, arranged in or externally coupled with the apparatus 102 or a storage unit 124 of the mobile terminal 120. Similarly, the storage unit may be a storage unit (not shown in Fig.1) of the terminal 114 of the IFE-system. If the audio signal is forwarded to the storage unit 112 related to the apparatus 102, the forwarding may take place within the apparatus in a wired manner. On the other hand, if the audio signal is forwarded to the storage unit 124 of the mobile terminal 120 or to the storage unit of the terminal 114 of the IFE-system, the step of forwarding the audio signal may comprise determining one or more mobile terminals 120 or terminals 114 of the IFE-system to which the audio signal shall be forwarded.

Determining if the audio signal shall be forwarded to one or more of the terminals 114 of the IFE-system may depend on detecting, by the CIDS, if the respective terminal 114 is currently running and/or if the passenger that is currently using the respective terminal 114 may have chosen a specific setting of the respective terminal 114 to receive forwarded audio signals.

Different techniques may be implemented for determining the one or more mobile terminals 120 for forwarding the audio signal. For example, one or more mobile terminals 120 that have registered with an on board connectivity system like e.g. an on board base station of the aircraft, may be determined. For example, information provided by one of the mobile terminals 120 to an on board connectivity system may be used to determine that the audio signal is to be forwarded to the respective mobile terminal 120. This on board connectivity system may be or comprise an on board base station (BS) conforming to various communication standards such as Global System for Mobile Communications (GSM), Universal Mobile Telecommunications System (UMTS), Long Term Evolution (LTE), and/or LTE-advanced (LTE-a). The on board connectivity system may be or comprise an on board access point (AP) conforming to various wireless local area network (LAN) standards.

Alternatively or additionally, one or more mobile terminals 120 on which a respective application is installed may be determined as a recipient of the forwarded audio signal. The application may be specifically dedicated to the purpose of receiving audio signals on board aircraft. In order to finally receive the audio signals, the passenger may register himself/herself with the application. Besides on one or more of the mobile terminals 120, the application may be also running on terminals 114 of the IFE-system. In case of the application running on a mobile terminal 120, the application may have been downloaded by the passenger that is in possession of the mobile terminal 120.

Alternatively or additionally, one or more devices on which a subscription procedure has been performed may be determined as a recipient of the audio signal. The subscription procedure may be performed online (e.g. preliminary to boarding the flight) on a respective webpage. The audio signal may then be sent to all registered mobile terminals 120 in multicast.

Alternatively or additionally, the step of forwarding the audio signal may comprise broadcasting the audio signal to terminals 114 and 120 within reach.

Alternatively or additionally, the step of forwarding the audio signal from the providing unit 108 to the storage unit 124 may comprise transmitting the audio signal as a beacon message to all devices within reach. The beacon message may be a wireless LAN (WLAN)/Wi-Fi beacon message or a Bluetooth beacon message. For example, the beacon message may be or comprise a beacon frame. A beacon frame is one of the management frames in IEEE 802.11 based WLANs. It contains all the information about the network. Beacon frames are usually transmitted periodically to announce the presence of a wireless LAN. Beacon frames are typically transmitted by the AP in an infrastructure basic service set (BSS), i.e. the beacon frame is typically provided by the AP to several stations.

As indicated above, it is further possible that the obtaining step that includes the recording of the announcement to the passengers is carried out by the recording unit 122 of the mobile terminal 120. In such a case, the forwarding step of the audio signal to a storage unit comprises forwarding the audio signal from the recording unit 122 of the mobile terminal 120 to the storage unit 124 of the mobile terminal 120. Therefore, both the recording unit 122 as well as the storage unit 124 may be operatively coupled to a processor of the mobile terminal 120.

The step S206 of providing the audio signal to one or more of the passengers on board the aircraft upon request may comprise retrieving the audio signal from the storage unit in response to a request from one or more of the passengers via an interface of a terminal on board the aircraft and replaying the audio signal utilizing an audio output unit of the respective terminal. The interface may be an interface 116 of the terminal 114 of the IFE-system and/or an interface 126 of the mobile terminal 120. Similarly, the audio output unit may be an audio output unit 118 of the terminal 114 of the IFE-system and/or an audio output unit 128 of the mobile terminal 120. Both the audio output units 118 and 128 may comprise loudspeakers for replaying the audio signal as well as pins for inserting earphones.

If the audio output signal is requested to be replayed via the interface 116 of the terminal 114, the step of retrieving the audio signal includes retrieving the audio signal from the storage unit 112 arranged in or coupled with the apparatus 102. Said retrieving can either take place in a wireless manner or via a cable connection as already indicated for the forwarding step between the apparatus 102 and the terminal 114 indicated above.

On the other hand, if the request for replaying the audio signal is conducted via the interface 126 of the mobile terminal 120, the audio signal is either retrieved from the storage unit 112 or, if locally stored in the mobile terminal 120, from the storage unit 124.

Both interfaces 116 and 126 may comprise a touch sensitive screen for inputting the request to retrieve and replay the audio signal. Alternatively and/or additionally, the request to retrieve the audio signal may be input via a push button of a remote control respectively connected to the terminal 114 and/or the mobile terminal 120. Each time replaying of the audio signal is requested by the passenger, the audio signal is replayed utilizing one of the audio output units 118 and 128, respectively. The number of possible requests is not limited to one. Rather, a passenger may request an audio signal related to a certain announcement to passengers several times, i.e. as often as desired. The storage units 112 and 124 may not only comprise the most recent announcement made to the passengers, but rather may comprise all announcements that were made during the flight to the passengers by the flight personnel. That is, a passenger may choose, via the respective interface unit 116 or 126, which audio signal (i.e. which specific announcement) shall be replayed upon his/her request. This may be specifically helpful if a passenger desires to listen to a certain announcement again, e.g. because he/she did not understand every word of the pertaining announcement or was possibly asleep during said announcement was made. Apart from that, it is specifically helpful for hearing-impaired people that they can listen to a certain announcement more than just once in order to capture the whole content of the announcement.

To further enhance the understandability of such announcements, the step of providing the audio signal may further comprise a filtering of the audio signal. Filtering the audio signal is not limited to being conducted during the step of providing the audio signal. Rather, it is similarly conceivable to filter the audio signal during one of the obtaining and/or forwarding steps of the audio signal.

To improve the understandability of the audio signal, filtering of the audio signal may be conducted according to a predetermined filter characteristic that is suited to compensate for aircraft-specific noise. That is, noise that typically arises on board an aircraft, be it during take-off and/or landing and/or during a normal flight situation may be removed or at least suppressed to a certain extent through filtering. As such, for example vibrations that occur in the flight cabin, and other disturbing noise such as engine noise as well as noise that arises from conversations between other passengers and/or flight attendants may be filtered from the audio signal before replay.

Although the predetermined filter characteristic should be particularly suited for supressing aircraft-related noise, it is possible to manually override said filter characteristic by the passenger that requests the audio signal for replay. That is, if requesting passenger has the impression that he/she is not able to fully understand the audio signal despite listening to it for several times, the filter characteristic may be individually adjusted by the passenger by using an equalizer functionality. As such, special frequency ranges such as bass and treble but also the tone colour may be changed by the passenger to fit his/her individual needs.

The step S204 of forwarding the audio signal to either the storage unit 112 or the storage unit 124 may comprise forwarding the audio signal via secure interface. Nevertheless, using the secure interface is not limited to the forwarding step. If for example the providing step S206 comprises retrieving the audio signal from the storage unit 112 for replay on the mobile terminal 120, it is also possible that said retrieving takes place via the secure interface.

It is believed that the advantages of the technique presented herein will be fully understood from the foregoing description, and it will be apparent that various changes may be made in the form, constructions and arrangement of the exemplary aspects thereof without the departing from the scope of the disclosure of without the sacrificing all of its advantages effects. Because the technique presented herein can be varied in many ways, it will be recognized that the disclosure should be limited only by the scope of the claims that follow.

## Claims

1. A method of providing an audio signal on board an aircraft (100), wherein the method comprises:
- obtaining (S202) an audio signal related to an announcement to passengers of an aircraft;
- forwarding (S204) the audio signal to a storage unit; and
- providing (S206) the audio signal to one or more of the passengers on board the aircraft upon request.

2. The method of claim 1, wherein the step of providing (S206) the audio signal comprises
- retrieving the audio signal from the storage unit in response to a request from one or more of the passengers via an interface of a terminal (114, 120) on board the aircraft (100); and
- replaying the audio signal utilizing an audio output unit (118, 128) of the terminal.

3. The method of claim 2, wherein the terminal (114, 120) is a terminal of an in-flight entertainment system or a mobile terminal.

4. The method of any one preceding claim, wherein the step of obtaining (S202) the audio signal further comprises recording the announcement to the passengers by a cabin management system of the aircraft and/or by the terminal (114, 120) on board the aircraft.

5. The method of any one preceding claim, wherein the storage unit is a storage unit permanently installed on board the aircraft (100).

6. The method of claim 3, wherein the storage unit is a storage unit of the mobile terminal (120).

7. The method of any one preceding claim, wherein the step of providing (S206) the audio signal further comprises filtering of the audio signal according to a filter characteristic.

8. The method of claim 7, wherein the filter characteristic is a predetermined filter characteristic to compensate for aircraft related noise.

9. The method of claim 7 or 8, wherein the filter characteristic is individually adjusted by one or more of the passengers by adjusting an equalizer functionality.

10. The method of any one preceding claim, wherein the step of forwarding (S204) the audio signal to the storage unit comprises forwarding the audio signal via a secure interface.

11. A computer program product comprising program code portions for performing the method of any one of claims 1 to 10 when the computer program product is executed on a computer system or one or more computing devices.

12. A computer readable recording medium storing a computer program product according to claim 11.

13. An apparatus (102) for providing an audio signal on board an aircraft (100), wherein the apparatus comprises:
- an obtaining unit (104) configured to obtain an audio signal related to an announcement to passengers of an aircraft;
- a forwarding unit (106) configured to forward the audio signal to a storage unit; and
- a providing unit (108) configured to provide the audio signal to one or more of the passengers on board the aircraft upon request.

14. Aircraft (100) comprising the apparatus (102) of claim 13.
